# EUROPÄISCHE PATENTSCHRIFT

(11) **EP 4 065 524 B1**
(45) Veröffentlichungstag und Bekanntmachung des Hinweises auf die Patenterteilung: **14.05.2025**
(21) Anmeldenummer: 20815763.6
(22) Anmeldetag: 25.11.2020
(51) Int. Cl.: C02F 5/14, C02F 1/66

(54) **VERFAHREN ZUM KORROSIONSSCHUTZ**
METHOD FOR CORROSION PROTECTION
PROCÉDÉ DE PROTECTION CONTRE LA CORROSION

(30) Priorität: 28.11.2019 DE 102019132318; 26.02.2020 DE 102020104962
(43) Veröffentlichungstag der Anmeldung: 05.10.2022
(73) Patentinhaber: BWT Holding GmbH, 5310 Mondsee (AT)
(72) Erfinder: JOHANN, Jürgen, 69226 Nußloch (DE); SCHMIDT, Thomas, 68519 Viernheim (DE)
(74) Vertreter: Friderichs, Gunther
(86) Internationale Anmeldenummer: PCT/EP2020/083312
(87) Internationale Veröffentlichungsnummer: WO 2021/105178

(56) Entgegenhaltungen:
- EP-A1- 2 456 327
- WO-A1-2008/064504
- CH-A5- 569 504
- DE-A1- 1 517 496
- US-A- 2 977 260

## Beschreibung

### Gebiet der Erfindung

Die Erfindung betrifft ein Verfahren zum Korrosionsschutz, welches bzw. welche in wasserführenden Leitungen und Installationssystemen als Korrosionsschutz sowohl zur Sanierung als auch zur Vorsorge verwendet werden kann. Durch das Verfahren wird eine Silikat-haltige Schicht auf den Innenwänden von wasserführenden Leitungen und Installationen gebildet, die die Korrosion minimiert.

### Hintergrund der Erfindung

Als Korrosionsschutz für wasserführende Installationen ist die Verwendung von silikat- und phosphathaltigen Inhibitorenlösungen für wasserführende Systeme bekannt. So kann mit guter Wirksamkeit eine silikathaltige Schutzschicht auf Metallrohren, beispielsweise in Trinkwasserverteilungsnetzen, insbesondere in Hausinstallationen, aus verzinktem Stahl, unlegiertem Stahl oder niedrig legiertem Stahl gebildet werden.

Die Offenlegungsschrift DE 10 2014 003 770 A1 sieht vor, dass zur Verbesserung der Wirksamkeit einer Inhibitoren-Lösung diese unmittelbar vor der Verwendung thermisch aktiviert wird. Dieses Vorgehen ist allerdings aufwendig. Die Offenlegungsschrift EP 1 780 310 A2 beschreibt ein Verfahren, bei welchem aus zwei Lösungen unmittelbar vor der Verwendung eine dritte Dosierlösung hergestellt wird. Auch diese Vorgehensweise ist aufwendig.

Weiter werden derartige Inhibitoren-Lösungen in der Regel mittels einer Dosierpumpe dem Wasser zugegeben. Dies ist aufwendig und erfordert insbesondere die Messung des Volumenstroms, um die Dosierung einzustellen.

Das Dokument DE 1 517 496 beschreibt ein Verfahren zum Schutz von Rohrleitungssystemen, wobei kolloidale Kieselsäure zugesetzt wird. Das Dokument WO 2008/064504 A1 beschreibt ein mikroporöses Filtermaterial mit Kieselsäure und basischen Metalloxiden zum Abtrennen von Viren und Bakterien. Das Dokument CH 569 504 A5 zeigt einen Filter mit Silikagel und Kohle. Das Dokument EP 2 456 327 A1 zeigt ein Verfahren zum Herstellen von Wasser, welches mit natürlicher Orthokieselsäure angereichert ist, um eine verbesserte Bioverfügbarkeit zu erzielen.

### Aufgabe der Erfindung

Der Erfindung liegt demgegenüber die Aufgabe zugrunde, ein Verfahren zum Korrosionsschutz bereit zu stellen, in dem die genannten Nachteile des Standes der Technik reduziert sind. Insbesondere soll auf einfache Weise eine Silikat-haltige Schutzschicht erzeugt werden können.

### Zusammenfassung der Erfindung

Die Aufgabe der Erfindung wird bereits durch ein Verfahren zur Behandlung, insbesondere Sanierung eines Wasserinstallationssystems zum Korrosionsschutz für wasserführende Leitungen und Installationssysteme mit den Merkmalen des Anspruchs 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Verfahren zur Behandlung, insbesondere Sanierung, eines Wasserinstallationssystems, wobei zumindest ein Teilstrom des Wassers über vernetzte Kieselsäure geleitet wird.

Das Verfahren wird gemäß der Erfindung zur Behandlung von Trinkwasserleitungen in Trinkwasserverteilungsnetzen, insbesondere in Hausinstallationen, aus verzinktem Stahl, unlegiertem Stahl und/oder niedrig legiertem Stahl, also mit einem Massenanteil der Legierungskomponenten von maximal 5 %, verwendet.

Insbesondere auch in Kühl- und Heizsystemen mit Leitungen aus o.g. Werkstoffen ist das Verfahren einsetzbar.

Vorzugsweise wird eine Kartusche, befüllt mit vernetzter Kieselsäure, in einen Bypass des Wasserstromes geschaltet. Ein Teilstrom des Wassers wird über die Kartusche geführt. Dabei löst sich ein Teil der Kieselsäure.

Im Wasser bildet sich Silikat, welches korrosionsschützend auf die o.g. Werkstoffe wirkt.

Der Teilstrom über die Kartusche wird so eingestellt, dass nach Vermischen mit dem Hauptstrom die gewünschte Konzentration an Silikat und/oder Phosphat erreicht wird.

Die Kartusche kann gemäß einer anderen Ausführungsform der Erfindung auch in den Vollstrom geschaltet werden.

Die Verwendung von vernetzter Kieselsäure ermöglicht die Bereitstellung einer Silikat-bildenden Substanz als Feststoff.

Hierdurch wird die Dosierung und/oder Handhabung wesentlich vereinfacht.

Insbesondere kann die Dosierung z.B. über den Volumenstrom, der bei fließendem Wasser z.B. durch einen Bypass verläuft, in welchen die Kartusche geschaltet ist, eingestellt werden.

Auf die aufwendige Verwendung einer Dosierpumpe kann verzichtet werden.

Weiter ist die vernetzte Kieselsäure nahezu unbegrenzt haltbar und muss zur Abgabe von Kieselsäure und der damit einhergehenden Silikatbildung im zu behandelnden Wasser lediglich in Kontakt mit dem Wasser kommen.

Die vernetzte Kieselsäure gibt beim Durchlaufen von Wasser Silicium ab, wobei im Folgenden im Sinne der Erfindung Mengenangaben bezüglich Siliciums als SiO₂ berechnet sind.

Es wird vorzugsweise als vernetzte Kieselsäure ein Kieselgel in Form einer wasserhaltigen, porösen, amorphen Modifikation von Siliciumdioxid (SiO₂) verwendet.

Anstelle von vernetzter Kieselsäure und Kieselgel werden oft auch die Bezeichnungen "Silica Gel", "amorphes Siliciumdioxid", "Polykieselsäure" und "Kieselsäuredioxid" verwendet.

Es hat sich herausgestellt, dass zumindest bei Auswahl eines Materials mit hoher Feuchtigkeit und/oder einem hohen Anteil an Silanolgruppen eine derart hohe Löslichkeit erreicht werden kann, dass eine hinreichende Siliciumabgabe erreicht wird.

Die Erfinder vermuten, dass eine Hydrolysereaktion für das Auflösen von vernetzter Kieselsäure notwendig ist. Die Lösegeschwindigkeit ist somit von der Hydrolysegeschwindigkeit abhängig, welche wiederum von der Modifikation des Siliciumdioxids abhängt. Bei Modifikationen, insbesondere stark erhitzten Siliciumdioxides mit einer Gerüststruktur mit vielen Si-O-Si Bindungen ist der Energiebedarf höher, da diese Bindung erst gespaltet werden muss. Somit werden vorzugsweise Modifikationen verwendet, welche einen hohen Wasseranteil und/oder einen hohen Glühverlust aufweisen.

Bei Kontakt der vernetzen Kieselsäure mit Wasser spaltet sich geringer polymerisierte oder nicht polymerisierte Kieselsäure ab (z.B. Monokieselsäure, Dikieselsäure).

Zum Beispiel:

SiO_{2 (s)} + 2 H₂O 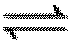

Si(OH)_{4 (aq)}

Kieselsäure ist eine schwache Säure. Deshalb wird dadurch der pH-Wert und die Leitfähigkeit des behandelten Wassers nur unwesentlich verändert.

Die für die Erfindung verwendete vernetzte Kieselsäure kann beispielsweise wie folgt hergestellt werden.

Mögliche Ausgangsmaterialien für die vernetzte Kieselsäure sind wässrige Lösungen von Alkalisilikat, z.B. Natriumsilikat, aus denen eine amorphe Kieselsäure durch den Zusatz einer Säure ausgefällt wird.

Die ausgefallene Kieselsäure wird abfiltriert, gewaschen und getrocknet.

Vorzugsweise wird die Kieselsäure beim Trocknen nicht über 250°C erwärmt, da sonst die Silanolgruppen abgespaltet werden können.

Gemäß einer bevorzugten Ausführungsform der Erfindung hat die vernetzte Kieselsäure einen Glühverlust bei 1000°C von 3 % bis 30 %, bevorzugt von 5 % bis 25 %, besonders bevorzugtvon über 6 % bis 15 %, vorzugsweise über 7 % bis 10 %, insbesondere zwischen 7 und 9 % (analog FGK-AV "Glühverlust" (2012-12)). Der Glühverlust wird also entsprechend der FGK-AV "Glühverlust" bestimmt, nur bei einer etwas niedrigeren Temperatur von 1000 °C.

Der Glühverlust ist ein Maß für den Anteil an Silanolgruppen.

Kieselsäuren enthalten, wie vorstehend ausgeführt, einen gewissen Anteil chemisch, in Form von Silanolgruppen, gebundenen Wassers. Dieser wird durch den Glühverlust bei 1000 °C bestimmt. Der Glühverlust kann auf Basis der Originalsubstanz bestimmt werden, wird jedoch berechnet anhand der bei 105°C oder bei 110 °C getrockneten Substanz. Der Glühverlust bezieht sich somit auf eine bei 105 °C oder bei 110 °C vorgetrocknete Probe.

Vorzugsweise hat die Kieselsäure einen Trocknungsverlust von über 30 %, vorzugsweise von über 40 %, besonders bevorzugt von über 50 %, insbesondere einen Trocknungsverlust von 55 bis 65 %. Der Trocknungsverlust kann entsprechend der DIN EN ISO 787-2 - 1995-04 bestimmt werden.

Es hat sich herausgestellt, dass die Kieselsäure bis auf etwa 130 °C oder sogar bis auf etwa 145 °C erhitzt und dabei getrocknet werden kann, ohne dass die Löslichkeit wesentlich sinkt.

Gemäß einer bevorzugten Ausführungsform der Erfindung hat die Kieselsäure eine spezifische Oberfläche von über 300 m²/g, vorzugsweise über 700 m²/g, besonders bevorzugt über 800 m²/g, insbesondere zwischen 820 und 1000 m²/g.

Die spezifische Oberfläche kann gemäß BET-Verfahren nach DIN ISO 9277-2017-07 bestimmt werden.

Es wird vorzugsweise Kieselsäure verwendet, welche eine Löslichkeit bei 25 °C (in VE-Wasser) von über 80 mg/l, vorzugsweise über 100 mg/l und besonders bevorzugt über 150 mg/l aufweist. Insbesondere liegt die Löslichkeit zwischen 140 und 180 mg/l (berechnet als SiO₂)

Die Löslichkeit kann bestimmt werden, indem eine hinreichende Menge Kieselsäure, welche derart groß ist, dass diese sich nicht vollständig auflöst, so lange in 25 °C warmen Wasser verrührt wird, bis sich eine Sättigung einstellt.

Die Kieselsäure und/oder das optional vorhandene Phosphat kann als ein Granulat ausgebildet sein, insbesondere mit einer mittleren Korngröße von 0,5 bis 3,0 mm.

In einer anderen Ausführungsform kann die Kieselsäure auch als Pulver oder als vorzugsweise poröser Block aus miteinander verbundenen Partikeln vorliegen.

Die innere Struktur der Kieselsäure besteht aus einem großen Netzwerk von miteinander verbundenen mikroskopischen Poren mit einem hohen Gehalt an Silanolgruppen, die durch Physisorption und Kapillareffekte Wasser anziehen und halten können. Dadurch besitzt das Material eine hinreichende Löslichkeit in Wasser.

Dies wird erreicht, indem eine Kieselsäure verwendet wird, welche eine hohe spezifische Oberfläche und einen hohen Anteil an Silanolgruppen (gekennzeichnet durch einen hohen Glühverlust bei 1000 °C) aufweist.

Vorzugsweise ist die Kartusche mit synthetisch hergestellter Kieselsäure befüllt.

Es können als Kieselsäure insbesondere unter der CAS-Nr. 112926-00-8, 7631-86-9, 1343-98-2, 7699-41-4, 63231-67-4 bzw. 10193-36-9 registrierte Stoffe verwendet werden.

Durch die Kieselsäure bildet sich Silikat, welches ausfällt und auf Oberflächen, insbesondere auf der Innenwand von Metallleitungen, eine Schutzschicht bildet.

So kann insbesondere bei verzinkten Trinkwasserrohrleitungen die Korrosion herabgesetzt werden.

Weiter kann, wie vorstehend ausgeführt, das Wasser für die Befüllung von Heiz- oder Kühlkreisläufen verwendet werden. Dies gilt insbesondere für Kreisläufe mit Leitungen aus unlegierten und niedriglegierten Eisenwerkstoffen.

Vorzugsweise enthält die für die Zudosierung verwendete Kartusche 20 bis 10.000 ml, besonders bevorzugt 100 bis 1000 ml, vernetzte Kieselsäure.

Gemäß einer Weiterbildung der Erfindung wird dem Wasser ein Phosphat, insbesondere ein Orthophosphat, insbesondere Magnesiumphosphat, insbesondere Magnesiumtriphosphat und/oder Calciumphosphat zudosiert.

Weiter kann dem Wasser ein Polyphosphat, insbesondere Natrium-Calcium-Polyphosphat, zudosiert werden.

Die kettenförmigen Polymere eines Phosphats werden gemeinhin als Polyphosphat bezeichnet. Der Kondensationsgrad des Polyphosphats beträgt vorzugsweise mindestens 4.

Das oder die Phosphate können als Feststoff vorliegen.

So kann ein Phosphatgranulat mit einem Granulat aus vernetzter Kieselsäure in einer Kartusche als Gemisch vorliegen.

Gemäß einer anderen Ausführungsform der Erfindung liegen das oder die Phosphate und die vernetzte Kieselsäure in getrennten Kammern vor.

Über ein einstellbares oder bauartbedingtes Volumenstromverhältnis durch die Kammern kann trotz ggf. unterschiedlicher Löslichkeiten von Phosphat und Kieselsäure ein gleichmäßiger Abbau beider Komponenten sowie das gewünschte Verhältnis von Silikat zu Phosphat erreicht werden.

Die Komponenten Kieselsäure und Orthophosphat bewirken den Korrosionsschutz, indem sie eine dichte und homogene Schutzschicht auf der Rohrinnenseite ausbilden.

Die Polyphosphat-Komponente dient zur Wasserschönung, indem sie durch Korrosionsvorgänge gebildete Eisen(III)ionen komplexiert und somit die gelb bis rostbraune Färbung des Wassers verschwindet und das Wasser klar und farblos erscheint.

Das ist insbesondere am Anfang einer Sanierungsmaßnahme wichtig, so lange bis die Korrosionsinhibitoren Silikat und Orthophosphat greifen.

Außerdem bewirkt die Polyphosphat-Komponente eine Verschleppung der Korrosionsschutzkomponenten in die hinteren Bereiche des Wasserverteilungsnetzes und verhindert, dass diese mit den im Wasser vorhandenen Calcium- und Magnesiumionen reagieren und bereits vollständig im vorderen Bereich des Wasserverteilungsnetzes ausfallen.

Weiterhin bewirkt die Polyphosphatkomponente eine Härtestabilisierung des Wassers.

Insbesondere konnte die Gefahr der Bildung von schwarzen Biofilmen an den Auslaufarmaturen deutlich reduziert werden, da der Phosphatanteil möglichst gering gehalten werden kann.

Das Massenverhältnis von Silikat zu Phosphat, also der Summe aller Phosphate, liegt vorzugsweise zwischen 2,0 und 10,0, besonders bevorzugt zwischen 3,0 und 6,0 und ganz besonders bevorzugt zwischen 4,0 und 5,0.

Gemäß einer Ausführungsform der Erfindung wird das Wasser auf eine Silikatkonzentration von 0,5 bis 15 g/m³, vorzugsweise von 1 bis 12 g/m³, eingestellt.

Gemäß einer Ausführungsform der Erfindung wird das Verfahren für die Sanierung eines Wasserinstallationssystems verwendet, wobei als Sanierungsdosis eine höhere Menge, insbesondere eine mindestens zweifach höhere Menge, an Silicium und/oder Phosphat, als in einer anschließenden Erhaltungsdosis, zugeführt wird.

Bei der Erhaltungsdosierung kann die Phosphatkonzentration auf 0,3 bis 1,3 g/m³, insbesondere sogar auf 0,6 bis 0,7 g/m³, eingestellt werden. Die Bildung von schwarz gefärbten Biofilmen kann so recht sicher verhindert werden.

Gemäß der Erfindung wird das Wasser über ein alkalisierendes Filtermaterial geleitet.

Hierzu umfasst der Behälter gemäß der Erfindung eines oder eine Mischung aus zumindest zwei der Materialien enthält, die aus der Gruppe ausgewählt sind, Carbonate und/oder Metall- und/oder Halbmetalloxide.

Weiter kann der Behälter beispielsweise zumindest eines oder eine Mischung aus zumindest zwei der Materialien enthalten, die aus der Gruppe ausgewählt sind, welche
Dolomite,
halbgebrannte Dolomite,
Carbonate, insbesondere Calciumcarbonat und/oder Magnesiumcarbonat,
Oxide, insbesondere Metall- und/oder Halbmetalloxide, insbesondere Calciumoxid und/oder Magnesiumoxid und/oder Magnesiumhydroxid und/oder Alkalihydroxide und/oder Erdalkalihydroxide,
umfasst.

Das alkalisierende Filtermaterial kann als Feststoff und insbesondere als Granulat vorliegen.

Vorzugsweise wird durch das alkalisierende Filtermaterial der pH-Wert des Wassers um mindestens 0,05, besonders bevorzugt mindestens 0,2 erhöht (gegenüber dem pH-Wert des über die vernetzte Kieselsäure geleiteten Wassers ohne das alkalisierende Filtermaterial).

Es hat sich gezeigt, dass durch das alkalisierende Filtermaterial, je nach Rohwasser, die Löslichkeit der vernetzten Kieselsäure erhöht werden kann. So kommt es zu einer verbesserter Silikatbildung.

Weiter wirkt die Erhöhung des pH-Werts korrosionsmindernd.

Durch den gleichzeitigen Zusatz von Silikat und der Alkalisierung des Wassers entsteht damit eine synergistische Wirkung, die den Korrosionsschutz verstärkt.

Außerdem kann sich auch alkalisches Trinkwasser positiv auf die menschliche Gesundheit auswirken und manchen Menschen schmeckt alkalisiertes Trinkwasser auch besser.

Das alkalisierende Material kann insbesondere als Feststoff eingesetzt werden. Beispielsweise kann es als ein Granulat ausgebildet sein, insbesondere mit einer mittleren Korngröße von 0,5 bis 3,0 mm.

Die Offenbarung betrifft des Weiteren eine Vorrichtung zum Korrosionsschutz für wasserführende Leitungen und Installationssysteme, welche insbesondere zur Ausführung des zuvor beschriebenen Verfahrens ausgebildet ist.

Die Vorrichtung umfasst einen vorzugsweise als austauschbare Kartusche ausgebildeten Behälter, durch den Wasser leitbar ist, wobei der Behälter mit einer vernetzten Kieselsäure befüllt ist.

Weiter kann der Behälter mit einem Ortho- und/oder einem Polyphosphat befüllt sein.

Insbesondere kann der Behälter mit den zuvor im Zusammenhang mit dem Verfahren beschriebenen Stoffen befüllt sein.

Weiter kann die Vorrichtung zumindest ein Drosselventil umfassen. Über das Drosselventil kann der Volumenstrom in einem Bypass und damit das Volumenstromverhältnis zwischen Haupt- und Teilstrom eingestellt werden. So kann auf einfache Weise die Dosierung eingestellt werden.

Über zumindest zwei Drosselventile ist auch denkbar, die Dosierung von Silikat und Phosphat getrennt einzustellen.

Der Behälter kann zumindest zwei Kammern aufweisen, um das Phosphat und die vernetzte Kieselsäure getrennt Durchströmen zu lassen.

Über das Volumenstromverhältnis durch die Kammern, welches einstellbar oder bauartbedingt vorgegeben ist, kann ggf. eine unterschiedliche Löslichkeit von Kieselsäure und Phosphat kompensiert werden.

Der Behälter ist gemäß der Erfindung auch mit einem alkalisierenden Filtermaterial befüllt, insbesondere mit zumindest einem der vorstehend beschriebenen Materialien. Vorzugsweise beträgt die Menge des alkalisierenden Filtermaterials mindestens 5 Gewichts% der vernetzten Kieselsäure.

### Kurzbeschreibung der Zeichnungen

Der Gegenstand der Erfindung soll im Folgenden bezugnehmend auf ein Ausführungsbeispiel näher erläutert werden.
Fig. 1 ist eine schematische Ansicht eines Wasserinstallationssystems, welches mit einem erfindungsgemäßen Verfahren behandelt wird.
Fig. 2 ist eine schematische Ansicht einer Vorrichtung zum Korrosionsschutz, welche als Kartusche ausgebildet ist.
Fig. 3 ist ein Flussdiagramm eines Ausführungsbeispiels der Erfindung.

### Detaillierte Beschreibung der Zeichnungen

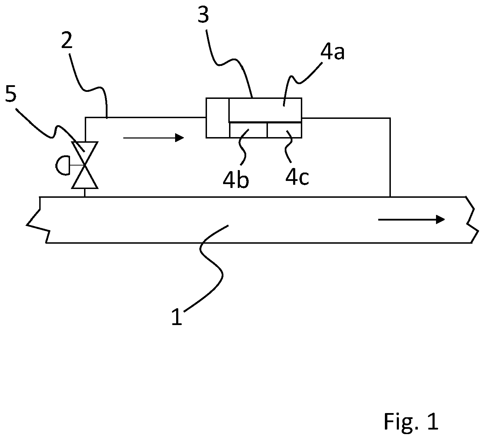

Fig. 1 zeigt in einer schematischen Ansicht ein Wasserinstallationssystem.

Das Wasserinstallationssystem umfasst zumindest eine Wasserleitung 1, durch welche Wasser, insbesondere Trinkwasser, fließt.

Über einen Bypass 2 wird ein Teilstrom über eine Kartusche 3 geleitet, welche in diesem Ausführungsbeispiel mit vernetzter Kieselsäure, einem Orthophosphat und einem Polyphosphat befüllt ist.

Für die verschiedenen Komponenten umfasst die Kartusche 3 die Kammern 4a - 4c. Die Kammern 4a - 4c können sowohl nebeneinander (4a gegenüber 4 und 4c) als auch hintereinander angeordnet sein (4b und 4a).

Vorzugsweise wird das Bypass-Wasser in einem getrennten Teilstrom über die mit Kieselsäure befüllte Kammer 4a geleitet.

Über das bauartbedingte Volumenstromverhältnis der Kammer 4a zu den Kammern 4b und 4c, welche mit Poly- sowie Orthophosphat befüllt sind, kann das Verhältnis von abgegebenem Silikat zu Phosphat bestimmt sein.

Über das im Bypass 2 vorhandene Drosselventil 5 kann in diesem Ausführungsbeispiel das Volumenstromverhältnis zwischen Hauptstrom und Bypass und damit die Abgabe von Silikat und Phosphat eingestellt werden, z.B. um in einer Sanierungsphase eine höhere Dosierung vorzunehmen als in einer sich anschließenden Erhaltungsphase.

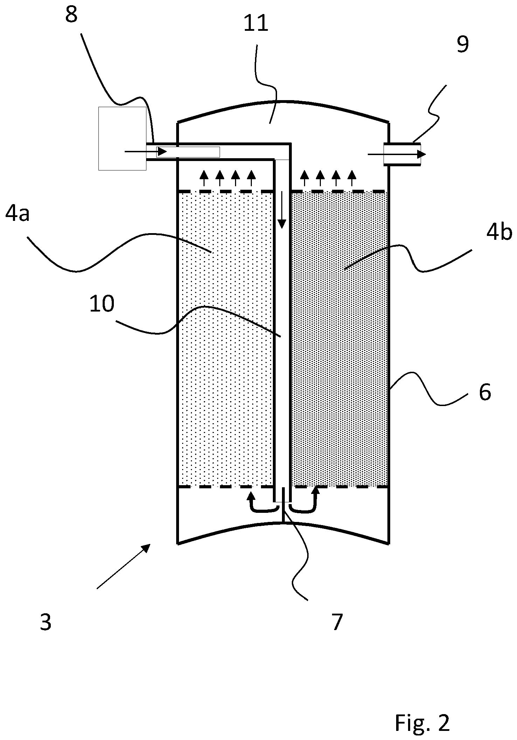

Fig. 2 zeigt schematisch den Aufbau eines Ausführungsbeispiel einer Kartusche 3, welche z.B. in den Bypass eines Wasserinstallationssystems eingesetzte werden kann.

Die Kartusche 3 umfasst ein Gehäuse 6 mit einem Zulauf 8 und einem Ablauf 9.

Über das Fallrohr 10 wird bei diesem Ausführungsbeispiel das Wasser in die Kartusche 3 geleitet.

Der Innenraum umfasst zwei Kammern 4a, 4b, die über eine axial verlaufende Trennwand 7 gebildet werden.

Die Kammer 4a ist mit vernetzter Kieselsäure und die Kammer 4b ist mit zumindest einem Phosphat befüllt.

Über die Größe der Kammern 4a, 4b, das bauartbedingte Volumenstromverhältnis durch die Kammern 4a, 4b und die Menge an Befüllung lässt sich das Verhältnis von Silikat- und Phosphatanreicherung fest einstellen.

Das Wasser durchläuft in zwei Teilströme unterteilt die Kammern 4a und 4b und wird in der Mischkammer 11 zusammengeführt, um sodann über den Ablauf 9 die Kartusche zu verlassen.

Sofern die Kartusche 3 in einen Bypass eingesetzt ist, wird das Wasser vom Ablauf 9 dem Hauptstrom zugeführt.

Die Kartusche 3 selbst kann ein Drosselventil (nicht dargestellt) umfassen, um das Volumenstromverhältnis zwischen Haupt- und Nebenstrom einzustellen.

Ebenso ist denkbar, das Volumenstromverhältnis zwischen den einzelnen Kammern 4a, 4b einstellbar auszugestalten, so dass so das Verhältnis von Silikat- zu Phosphatanreicherung verändert werden kann (nicht dargestellt).

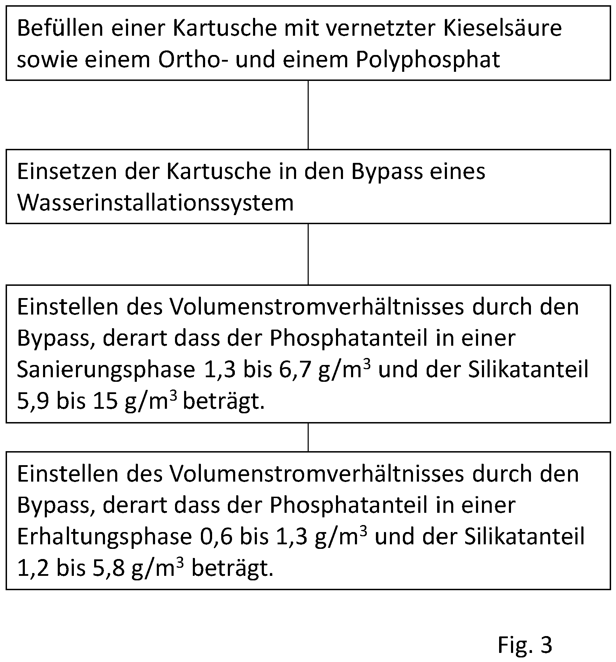

Fig. 3 zeigt in einem Flussdiagramm die Schritte des Verfahrens gemäß einem Ausführungsbeispiel der Erfindung zum Sanieren eines Installationssystems.

Es wird eine Kartusche bereitgestellt, welche mit vernetzter Kieselsäure sowie einem Ortho- und einem Polyphosphat befüllt ist.

Die Kartusche wird in einen Bypass des Wasserinstallationssystem eingesetzt.

Über zumindest ein Drosselventil wird der Volumenstrom durch den Bypass derart eingestellt, dass der Phosphatanteil (gesamt PO₄) in einer Sanierungsphase 1,3 bis 6,7 g/m³ und der Silikatanteil 5,9 bis 15 g/m³ beträgt.

Nach durchgeführter Sanierung wird die Dosierung durch Verringern des Bypass-Stroms über die Kartusche derart herabgesetzt, dass der Phosphatanteil 0,6 bis 1,3 g/m³ und der Silikatanteil 1,2 bis 5,8 g/m³ beträgt.

Durch die Erfindung konnte ein einfach aufgebautes und sicher verwendbares System zur Sanierung von Wasserinstallationssystemen bereitgestellt werden.

### Bezugszeichenliste:

- 1: Wasserleitung
- 2: Bypass
- 3: Kartusche
- 4a,4b,4c: Kammer
- 5: Drosselventil
- 6: Gehäuse
- 7: Trennwand
- 8: Zulauf
- 9: Ablauf
- 10: Fallrohr
- 11: Mischkammer

## Patentansprüche

1. Verfahren zur Behandlung, insbesondere Sanierung, eines Wasserinstallationssystems, wobei zumindest ein Teilstrom des Wassers durch einen Behälter geleitet wird, welcher mit einer vernetzten Kieselsäure befüllt ist, die als Feststoff vorliegt, und wobei das Wasser über ein alkalisierendes Filtermaterial geleitet wird, welches eines oder eine Mischung aus zumindest zwei der Materialien enthält, die aus der Gruppe ausgewählt sind, Carbonate und/oder Metall- und/oder Halbmetalloxide, und wobei eine Rohrleitung aus einem verzinkten, niedrig- oder unlegierten Eisenwerkstoff behandelt wird.

2. Verfahren nach dem vorstehenden Anspruch, **dadurch gekennzeichnet, dass** dem Wasser ein Phosphat, insbesondere ein Orthophosphat, insbesondere Magnesiumphosphat, insbesondere Magnesiumtriphosphat und/oder Calciumphosphat zugesetzt wird.

3. Verfahren nach dem vorstehenden Anspruch, **dadurch gekennzeichnet, dass** das Phosphat als Feststoff vorliegt.

4. Verfahren nach einem der vorstehenden Ansprüche, **dadurch gekennzeichnet, dass** dem Wasser ein Polyphosphat, insbesondere Natrium-Calcium-Polyphosphat, zugesetzt wird.

5. Verfahren nach dem vorstehenden Anspruch, **dadurch gekennzeichnet, dass** die vernetzte Kieselsäure einen Glühverlust bei 1000°C von 3 % bis 30 %, bevorzugt von 5 % bis 25 %, besonders bevorzugtvon über 6 % bis 15 %, vorzugsweise über 7 % bis 10 %, insbesondere zwischen 7 % und 9 % aufweist (analog FGK-AV "Glühverlust" (2012-12)).

6. Verfahren nach einem der vorstehenden Ansprüche, **dadurch gekennzeichnet, dass** eine vernetzte Kieselsäure mit einem Trocknungsverlust von über 30 %, vorzugsweise über 40 %, vorzugsweise von über 50 %, insbesondere einen Trocknungsverlust von 55 bis 65 %, verwendet wird.

7. Verfahren nach einem der vorstehenden Ansprüche, **dadurch gekennzeichnet, dass** eine vernetzte Kieselsäure mit einer spezifischen Oberfläche von über 300 m²/g, vorzugsweise über 700 m²/g, besonders bevorzugt über 800 m²/g, insbesondere zwischen 820 und 1000 m²/g verwendet wird (BET-Verfahren nach DIN ISO 9277-2017-07) und/oder mit einer Löslichkeit bei 25 °C von über 80 mg/l, vorzugsweise über 100 mg/l und besonders bevorzugt über 150 mg/l verwendet wird.

8. Verfahren nach einem der vorstehenden Ansprüche, **dadurch gekennzeichnet** das Wasser auf eine Phosphatkonzentration von 0,2 bis 8,0 g/m³, vorzugsweise von 0,3 bis 7,0 g/m³, und auf eine Silikatkonzentration von 0,5 bis 15 g/m³, vorzugsweise von 1 bis 12 g/m³, eingestellt wird.

9. Verfahren nach dem vorstehenden Anspruch, **dadurch gekennzeichnet, dass** das Wasser mit einer Erhaltungsdosierung für das Wasserinstallationssystem behandelt wird, wobei die Phosphatkonzentration auf 0,3 bis 1,3 g/m³, vorzugsweise auf 0,6 bis 0,7 g/m³ eingestellt wird.

10. Verfahren nach einem der vorstehenden Ansprüche, **dadurch gekennzeichnet, dass** das alkalisierende Filtermaterial Dolomite, halbgebrannte Dolomite, Calciumcarbonat und/oder Magnesiumcarbonat, Calciumoxid und/oder Magnesiumoxid und/oder Magnesiumhydroxid und/oder Alkalihydroxide und/oder Erdalkalihydroxide, umfasst.

11. Verfahren nach einem der vorstehenden Ansprüche, **dadurch gekennzeichnet, dass** die vernetzte Kieselsäure und/oder das Phosphat und/oder das alkalisierende Filtermaterial als Feststoff, insbesondere als Granulat ausgebildet sind, insbesondere mit einer mittleren Korngröße von 0,5 bis 3,0 mm.

## Claims

1. A method for treating, in particular rehabilitating, a water installation system, wherein at least a partial flow of the water is passed through a container filled with a cross-linked silica which is provided as a solid, and wherein the water is passed through an alkalizing filter material that contains one or a mixture of at least two of the materials selected from the group consisting of carbonates and/or metal oxides and/or semi-metal oxides, and wherein a pipeline made of galvanized, low-alloy or unalloyed iron material is treated.

2. The method according to the preceding claim, **characterized in that** a phosphate is added to the water, in particular an orthophosphate, in particular magnesium phosphate, especially magnesium triphosphate, and/or calcium phosphate.

3. The method according to the preceding claim, **characterized in that** the phosphate is provided as a solid.

4. The method according to any one of the preceding claims, **characterized in that** a polyphosphate is added to the water, in particular sodium calcium polyphosphate.

5. The method according to the preceding claim, **characterized in that** the cross-linked silica exhibits a loss on ignition at 1000 °C of 3 % to 30 %, preferably of 5 % to 25 %, more preferably of more than 6 % to 15 %, still more preferably of more than 7 % to 10 %, especially between 7 % and 9 % (analogous to FGK-AV "Loss on ignition" (2012-12)).

6. The method according to any one of the preceding claims, **characterized in that** a cross-linked silica with a loss on drying of more than 30 %, preferably more than 40 %, preferably more than 50 %, in particular a loss on drying of 55 to 65 %, is used.

7. The method according to any one of the preceding claims, **characterized by** using a cross-linked silica with a specific surface area of more than 300 m²/g, preferably more than 700 m²/g, particularly preferably more than 800 m²/g, in particular between 820 and 1000 m²/g (BET procedure according to DIN ISO 9277-2017-07), and/or with a solubility at 25 °C of more than 80 mg/l, preferably more than 100 mg/l, and most preferably more than 150 mg/l.

8. The method according to any one of the preceding claims, **characterized in that** the water is adjusted to a phosphate concentration of 0.2 to 8.0 g/m³, preferably 0.3 to 7.0 g/m³, and to a silicate concentration of 0.5 to 15 g/m³, preferably 1 to 12 g/m³.

9. The method according to the preceding claim, **characterized in that** the water is treated with a maintenance dosage for the water installation system, by adjusting the phosphate concentration to between 0.3 and 1.3 g/m³, preferably 0.6 to 0.7 g/m³.

10. The method according to any one of the preceding claims, **characterized in that** the alkalizing filter material comprises dolomite, semi-calcined dolomite, calcium carbonate and/or magnesium carbonate, calcium oxide and/or magnesium oxide and/or magnesium hydroxide and/or alkali hydroxides and/or alkaline earth hydroxides.

11. The method according to any one of the preceding claims, **characterized in that** the cross-linked silica and/or the phosphate and/or the alkalizing filter material are in solid form, in particular in the form of granules, especially with an average grain size of 0.5 to 3.0 mm.

## Revendications

1. Procédé de traitement, en particulier de réhabilitation, d'un système d'installation d'eau, dans lequel au moins un flux partiel de l'eau est passée à travers un récipient rempli d'une silice réticulée qui est présente sous forme de solide, et dans lequel l'eau est passée travers un matériau filtrant alcalinisant contenant un ou un mélange d'au moins deux des matériaux sélectionnés dans le groupe comprenant des carbonates et/ou des oxydes métalliques et/ou des oxydes semi-métalliques, et dans lequel une canalisation en matériau ferreux galvanisé, faiblement allié ou non allié est traitée.

2. Procédé selon la revendication précédente, **caractérisé en ce qu'**un phosphate est ajouté à l'eau, notamment un orthophosphate, en particulier du phosphate de magnésium, en particulier du triphosphate de magnésium et/ou du phosphate de calcium.

3. Procédé selon la revendication précédente, **caractérisé en ce que** le phosphate est sous forme de solide.

4. Procédé selon l'une quelconque des revendications précédentes, **caractérisé en ce qu'**un polyphosphate est ajouté à l'eau, en particulier du polyphosphate de sodium-calcium.

5. Procédé selon la revendication précédente, **caractérisé en ce que** la silice réticulée présente une perte au feu à 1000 °C de 3 % à 30 %, de préférence de 5 % à 25 %, particulièrement préférée de plus de 6 % à 15 %, encore plus préférentiellement de plus de 7 % à 10 %, en particulier entre 7 % et 9 % (selon FGK-AV "Perte au feu" (2012-12)).

6. Procédé selon l'une quelconque des revendications précédentes, **caractérisé en ce qu'**on utilise une silice réticulée présentant une perte au séchage supérieure à 30 %, de préférence supérieure à 40 %, de préférence supérieure à 50 %, en particulier une perte au séchage de 55 à 65 %.

7. Procédé selon l'une quelconque des revendications précédentes, **caractérisé en ce qu'**on utilise une silice réticulée ayant une surface spécifique supérieure à 300 m²/g, de préférence supérieure à 700 m²/g, particulièrement préférée supérieure à 800 m²/g, en particulier entre 820 et 1000 m²/g (méthode BET selon DIN ISO 9277-2017-07), et/ou ayant une solubilité à 25°C supérieure à 80 mg/l, de préférence supérieure à 100 mg/l et particulièrement préférée supérieure à 150 mg/l.

8. Procédé selon l'une quelconque des revendications précédentes, **caractérisé en ce que** l'eau est ajustée à une concentration en phosphate de 0,2 à 8,0 g/m³, de préférence de 0,3 à 7,0 g/m³, et à une concentration en silicate de 0,5 à 15 g/m³, de préférence de 1 à 12 g/m³.

9. Procédé selon la revendication précédente, **caractérisé en ce que** l'eau est traitée avec un dosage d'entretien pour le système d'installation d'eau, la concentration en phosphate étant ajustée à 0,3 à 1,3 g/m³, de préférence à 0,6 à 0,7 g/m³.

10. Procédé selon l'une quelconque des revendications précédentes, **caractérisé en ce que** le matériau filtrant alcalinisant comprend de la dolomite, de la dolomite semi-calcinée, du carbonate de calcium et/ou du carbonate de magnésium, de l'oxyde de calcium et/ou de l'oxyde de magnésium et/ou de l'hydroxyde de magnésium et/ou des hydroxydes alcalins et/ou des hydroxydes alcalino-terreux.

11. Procédé selon l'une quelconque des revendications précédentes, **caractérisé en ce que** la silice réticulée et/ou le phosphate et/ou le matériau filtrant alcalinisant sont sous forme de solide, en particulier sous forme de granulés, notamment avec une granulométrie moyenne de 0,5 à 3,0 mm.
